# EUROPEAN PATENT SPECIFICATION

(11) **EP 3 136 048 B1**
(45) Date of publication and mention of the grant of the patent: **20.12.2017**
(21) Application number: 16185222.3
(22) Date of filing: 22.08.2016
(51) Int. Cl.: G01B 21/02, G01B 21/16, G01B 7/02, G01B 7/14, G01B 11/02, G01B 11/14

(54) **GLOVES HAVING MEASURING, SCANNING, AND DISPLAYING CAPABILITIES**
HANDSCHUHE MIT MESS-, ABTASTUNGS- UND ANZEIGEFÄHIGKEITEN
GANTS AYANT DES CAPACITÉS DE MESURE, DE BALAYAGE ET D'AFFICHAGE

(30) Priority: 27.08.2015 CN 201520653569 U; 27.01.2016 CN 201620078753 U; 02.08.2016 US 201615226117
(43) Date of publication of application: 01.03.2017
(60) Divisional application: 17162973.6
(73) Proprietor: Hand Held Products, Inc., Fort Mill, SC 29707 (US)
(72) Inventor: XU, Fangjian, Morris Plains, NJ 07950 (US); LI, Liang, Morris Plains, NJ 07950 (US); LI, Hui, Morris Plains, NJ 07950 (US)
(74) Representative: Houghton, Mark Phillip

(56) References cited:
- EP-A2- 2 833 323
- WO-A1-2010/003636
- US-A- 5 514 861
- US-A1- 2014 375 769

## Description

### CROSS-REFERENCE TO RELATED APPLICATION

The present application claims the benefit of Chinese Patent Application for Utility Model No. 201520653569.8 for *Gloves Having Measuring, Scanning, and Displaying Capabilities* filed at the State Intellectual Property Office of the People's Republic of China on August 27, 2015, now Chinese Patent No. ZL201520653569.8, and Chinese Patent Application for Utility Model No. 201620078753.9 for *Gloves Having Measuring, Scanning, and Displaying Capabilities* filed at the State Intellectual Property Office of the People's Republic of China on January 27, 2016, which itself claims the benefit of Chinese Patent Application for Utility Model No. 201520653569.8.

### FIELD OF THE INVENTION

The present invention relates to logistics and more particularly relates to incorporating logistics tools into a single unit.

### BACKGROUND

Generally speaking, the practice of logistics may be defined as the management of objects as they are moved throughout a system. For example, in the field of package delivery, it is important to perform certain functions to determine and maintain information about each package as it moves from one location to another. It is often beneficial to calculate various parameters of packages and track where the packages are located at any given time.

Typically, the practice of logistics involves using certain tools at different times to perform specific tasks. For example, it may be necessary to determine certain parameters of a package, such as size and weight. Of course, determining the size of a package may include using a tape measure, ruler, or yardstick to measure length, width, and height of the package. Also, a basic scale can be used to measure weight. Often, a barcode scanner is used to scan barcodes printed on packages.

Someone working in the field of logistics may be required to use several tools for performing these various functions. However, the tools are normally separate from each other and require a person to combine various pieces of information for a particular object into one entry. Also, keeping track of these various tools can be inconvenient. Therefore, a need exists for providing a way for a worker to easily access the necessary tools that may be used repeatedly and automatically correlate the information related to a single object into one entry.

From US 2014/0375769 A1 a pair of gloves with wireless communication devices is known to generate a 3D model of an object.

### SUMMARY

The present invention embraces a measuring apparatus according to claim 1.

In another exemplary embodiment, a measuring apparatus is disclose, wherein the measuring apparatus comprises a pair of gloves. The measuring apparatus also comprises means, attached to the pair of gloves, for determining a first dimension of an object. Also, the measuring apparatus includes means, attached to the pair of gloves, for measuring the weight of the object.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

FIG. 1A schematically depicts a view of a back side of a pair of gloves having logistics tools attached thereto, according to an embodiment of the present invention.
FIG. 1B schematically depicts a view of a palm side of the pair of gloves shown in FIG. 1A, according to an embodiment of the present invention.
FIG. 2 schematically depicts the pair of gloves of FIG. 1 being used to determine a dimension of an object, according to one implementation of the present invention.
FIG. 3 schematically depicts the pair of gloves of FIG. 1 being used to determine the weight of the object, according to one implementation of the present invention.
FIG. 4 schematically depicts a view of one of the gloves shown in FIG. 1 with an electronic module, according to an embodiment of the present invention.

### DETAILED DESCRIPTION

The present invention embraces devices for simplifying multiple physical tasks involved in the field of logistics. For example, a person working in a facility that measures, weighs, and tracks packages may use several types of tools for performing these functions. Embodiments for incorporating logistics tools into a single unit, such as a pair of gloves, are discussed in the present disclosure.

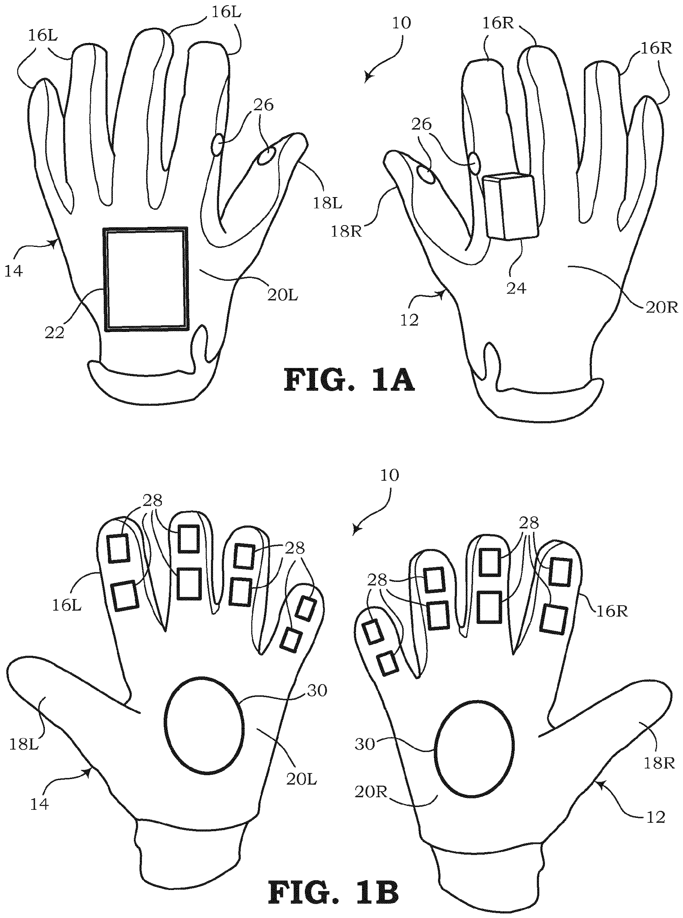

In an exemplary embodiment, FIG. 1A illustrates a view of a back side of a pair of gloves 10, which includes a right-handed glove 12 and a left-handed glove 14. FIG. 1B illustrates a view of a palm side of the pair of gloves 10. The right-handed glove 12 is configured to be worn on the right hand of a user and the left-handed glove 14 is configured to be worn on the left hand of the user. The right-handed glove 12 includes right finger portions 16R, right thumb portion 18R, and right hand portion 20R. The left-handed glove 14 includes left finger portions 16L, left thumb portion 18L, and left hand portion 20L.

The pair of gloves 10 further includes devices that are attached in any suitable manner to different portions of the gloves 12, 14. As shown in FIG. 1A, a display device 22 is attached to the back of the left hand portion 20L of the left-handed glove 14. Also, a scanner 24 is attached to the back of one of the right finger portions 16R of the right-handed glove 12. FIG. 1A also shows touch pads 26 attached to finger portions 16R, 16L and thumb portions 18R, 18L of the pair of gloves 10.

As shown in FIG. 1B, force sensors 28 are attached on the palm side of the finger portions 16R, 16L of the respective gloves 12, 14. FIG. 1B also shows wireless communication devices 30 attached on the palm side of the hand portions 20R, 20L of the respective gloves 12, 14.

The display device 22 is configured to display data related to measured parameters and information related to an object of which the pair of gloves 10 is intended to analyze. For example, the object may be a shipping package. The pair of gloves 10 is configured to measure the length, width, and height of the object, as explained in more detail below. Also, the pair of gloves 10 can measure the mass (or weight) of the object. The measured dimensions and/or weight can be displayed in any suitable manner on the display device 22 using any suitable units of measure.

In some embodiments, the display device 22 may include an LED screen, LCD screen, or other suitable type of display screen for displaying information to the user. Also, the display device 22 may comprise a material that includes a sufficient level of flexibility to allow the user's hand to bend during normal use without adversely affecting the screen.

The display device 22 may be configured to allow interaction with the user. For example, the display device 22 may be configured to receive input from the user as well as provide output to the user. The display device 22 may display input buttons that the user can press to enter a selection. The display device 22 can also show a prompt to the user requesting input from the user. Also, the display device 22 can indicate when a measurement has been successfully obtained or indicate when an error has occurred, etc. In some embodiments, the display device 22 may be combined with other output devices, such as audio devices for providing a beeping, buzzing, or other type of audio signal to the user to indicate certain conditions.

In FIG. 1A, the display device 22 is shown attached to the back side of the hand portion 20L of the left-handed glove 14. According to some embodiments, the left-handed glove 14 may include multiple display devices. Also, the display device 16 or multiple display devices may instead be configured on the back of the hand portion 20R of the right-handed glove 12. According to still other embodiments, multiple display devices may be configured on the hand portions 20R, 20L of both the right-handed glove 12 and left-handed glove 14.

The scanner 24 is attached to the back of a finger portion 16R of the right-handed glove 12. As shown, the scanner 18 is attached to the index finger of the finger portions 16R of the right-handed glove 12, but in other embodiments, it may be attached to any finger portion 16R of the glove 12. The scanner 24 is shown as being attached on the finger portion 16R at the knuckle located nearest to the hand portion 20R. According to various embodiments, the scanner 24 may be attached to any knuckle portion, any finger of either glove 12, 14, and according to still other embodiments, may be configured as multiple scanners attached to any knuckle portions of any fingers of either glove 12, 14 of the pair of gloves 10. Furthermore, the scanner 24 may be configured on a fingertip of one of the finger portions 16R, 16L to allow a user to point a particular finger at an optical code being scanned.

The scanner 24 may be configured to scan a code or image on the object. For example, the code may be a one-dimensional barcode, two-dimensional code (e.g., QR code), or other suitable type of optical code. For scanning optical codes, the scanner 24 may include one or more light sensors, laser scanning elements, etc.

Also, the code may be a Radio Frequency Identification (RFID) tag or other wireless transmission tag that the scanner 24 can sense or detect in order to determine an identification of the object. The RFID tag or other types of tags, which may be passive or active type devices, may be placed anywhere on or in the object.

The touch pads 26 may be located on one or both of the gloves 12, 14, and may be configured in pairs or individually. For example, when configured in pairs, the touch pads 26 may respond when the pair is touched together. In this sense, the touch pads 26 may be conductive elements used for completing a circuit. As individual components, the touch pads 26 may be touch sensitive elements that respond when touched with a predetermined amount of force by any element.

The touch pads 26 are configured to receive input from the user. The input may simply be a binary input, such as on or off input, and may be used to trigger an operation of one of the devices attached to the gloves 12, 14. For instance, if the user touches a pair of touch pads 26 together, such as by pressing the thumb against the side of the index finger, the connection of the touch pads 26 may be sensed and a trigger signal may be sent to one of the other devices (e.g., the scanner 24) of the gloves 12, 14 to initiate a certain operation (e.g., a scanning operation).

In addition to initiating a scanning operation, the touch pads 26 may also be configured to control the images and/or information displayed on the display device 22. Also, the touch pads 26 can be used to control when a measurement of the object is obtained. For example, when used in conjunction with the force sensors 28, the touch pads 26 can initiate when the force sensors 28 are in place to properly weight the object. Also, when the wireless communication device 30 are in the proper locations, as described in more detail below, the touch pads 26 can initiate when a dimension of the object is measured.

Regarding the force sensors 28 shown in particular in FIG. 1B, the force sensors 28 are located on the palm sides of the finger portions 16R, 16L of the gloves 12, 14. As shown, two force sensors 28 are attached to each of the finger portions 16R, 16L, but in other embodiments, one force sensor 28 or any number of force sensors 28 may be attached to each finger portion 16R, 16L. In some embodiments, one or more force sensors 28 may be located on any finger portions 16R, 16L, any thumb portions 18R, 18L, and/or any hand portions 20R, 20L, preferably on the palm side of the gloves 12, 14. The force sensors 28 may be positioned on an outside surface of the material of the gloves 12, 14 and/or may be embedded in the material of the gloves 12, 14.

The force sensors 28 may be configured to measure force applied thereto. The measured forces from all the force sensors 28 can be added together to obtain an accumulated force, which is indicative of the weight of the object. In operation, the user may hold the object (e.g., a shipping package) such that the fingers or finger tips are under the object and are configured to support all the weight of the object. When triggered, the forces are sensed and a weight can be measured.

Each one of the pair of gloves also includes a wireless communication device 30. The wireless communication devices 30 are configured to communication with each other using any suitable type of wireless communication protocol. The wireless communication devices 30 may be configured to transmit and receive signals in any suitable frequency range. For example, for line-of-sight applications, the wireless communication devices 30 may include infrared transmission. In other examples, the wireless communication devices 30 may utilize various radio frequency ranges depending on the various signal transmission protocols.

The pair of wireless communication devices 30 may be used to determine a distance or displacement between them. When the user holds the palms of the gloves 12, 14 against the outside surfaces of the object and when the wireless communication devices 30 are triggered, the wireless communication devices 30 communicate time-based signals with each other. From the time-based signals, a transmission time from one wireless communication device 30 to another can be calculated. The transmission time can then be multiplied by the known transmission speed (e.g., 3.0 X 10⁸ m/s). It should be recognized that the transmission speed may be affected by the transmission medium (i.e., the object being measured) and can be adjusted accordingly. The resulting product of the multiplied values (i.e., transmission time X transmission speed) is equal to the distance (d = R * t), which is indicative of a dimension of the object (from one side of the object to the other).

According to one implementation, when a user places the palms on opposite ends of the object, a first wireless communication device 30 may count the time starting from a first time when a transmission signal is first transmitted toward the second wireless communication device 30 to a second time when the first wireless communication device 30 receives a return signal back from the second wireless communication device 30. The second wireless communication device 30 may respond with the return signal either immediately or after a known processing delay. The total of the forward and return transmission times is divided by two to get the transmission time from one wireless communication device 30 to the other. This calculated time is then used to determine distance, which corresponds to an outside dimension (e.g., width) of the object.

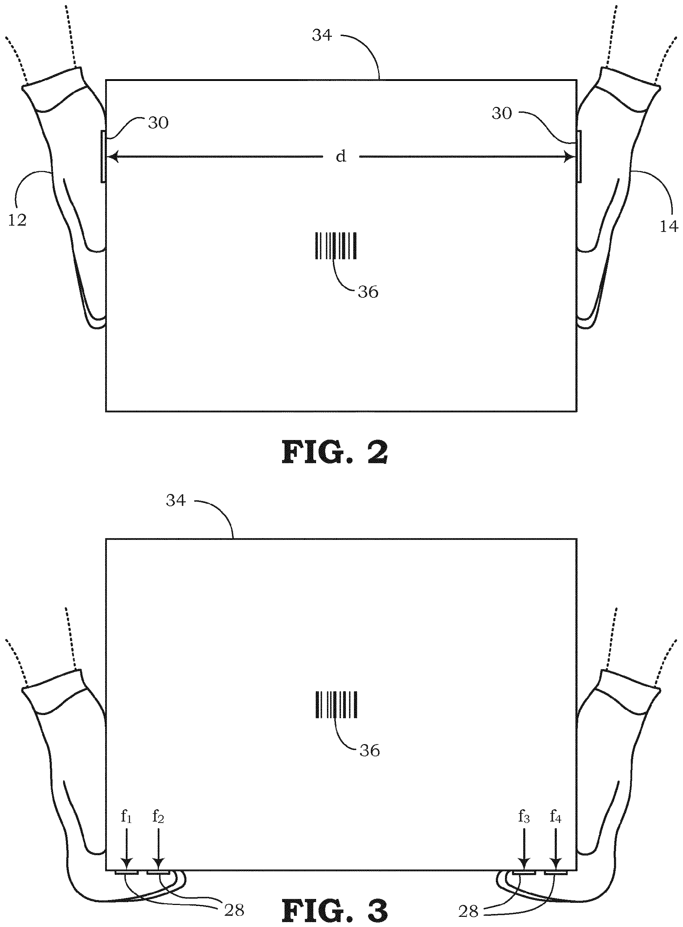

FIG. 2 illustrates the pair of gloves 10 in use for determining a dimension as explained briefly above. According to the implementation of FIG. 2, the measured dimension is a distance "d" from one end of an object 34 to the other. In this example, the object 34 is a package or box for which the size and weight thereof is determined.

The user places the palms of the gloves 12, 14 on opposite sides of the object 34 such that the wireless transmission devices 30 are substantially aligned with each other. When one or both of the wireless transmission devices 30 is triggered, the dimension (e.g., width) of the object 34 is detected. The user may wish to measure the width, length, and height of a rectangular box. For other shapes, such as cylindrical tubes, the user may measure other dimensions, such as length and diameter. When all pertinent measurements are obtained, a volume can be calculated, which may be used to determine shipping costs.

FIG. 3 illustrates the pair of gloves 10 in use for determining the weight of the object 34. In this example, the user, while wearing the pair of gloves 10, places his or her fingertips underneath the object 34 to support the weight of the object 34. The force sensors 28 will be interposed between the user's fingertips and the object 34 and therefore receive the force applied therebetween. Forces f₁, f₂, f₃, and f₄ represent each of the groups of forces applied to parts of the finger portions 16R, 16L corresponding to various bones in the user's hands. More specifically, f₁ represents the forces applied to the parts of the finger portions 16R of the right-handed glove 12 corresponding to the middle phalanges bones of the user's right hand; f₂ represents the forces applied to the parts of the finger portions 16R of the right-handed glove 12 corresponding to the distal phalanges bones of the user's right hand; f₃ represents the forces applied to the parts of the finger portions 16L of the left-handed glove 14 corresponding to the distal phalanges bones of the user's left hand; and f₄ represents the forces applied to the parts of the finger portions 16L of the left-handed glove 14 corresponding to the middle phalanges bones of the user's left hand. The groups of forces f₁, f₂, f₃, and f₄ are added together to calculate the weight of the object 34.

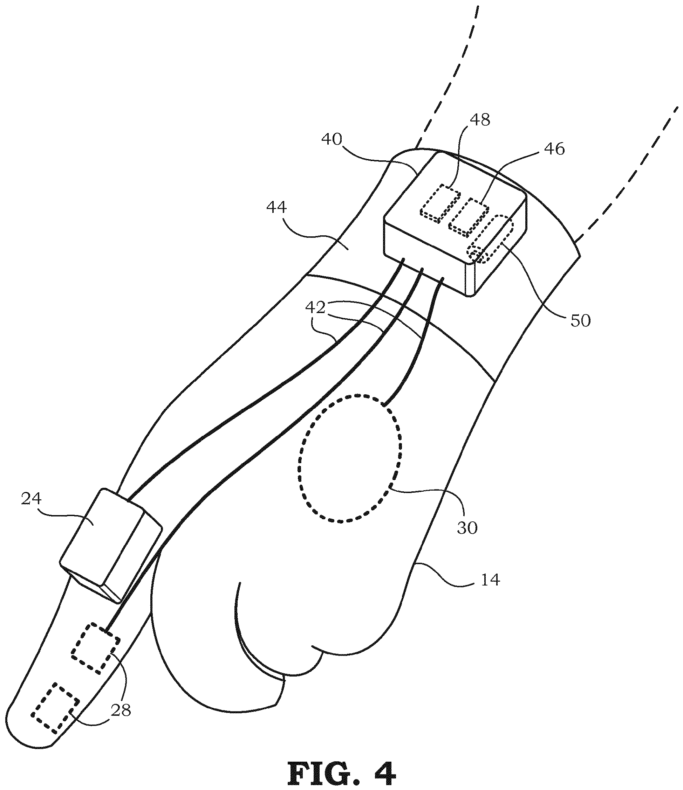

FIG. 4 illustrates an embodiment of an electronic module 40 that may be used with the other electrical components of the measuring apparatus connected to the pair of gloves 10. The electronic module 40 may be configured to make calculations, control functions of the various measurement devices, and control functions of the display device 22. Electrical connectors 42 may be attached between the electronic module 40 and the display device 22 (not shown in FIG. 4), scanner 24, touch pads 26 (not shown in Fig. 4), force sensors 28, and wireless communication devices 30.

As illustrated, the electronic module 40 may be attached to a wrist portion 44 of the left-handed glove 14. In other embodiments, the electronic module 40 may be attached to the right-handed glove 12 or may be divided between both gloves 12, 14. In still other embodiments, the electronic module 40 may be attached to a user's wrist or arm using any suitable type of attachment device, such as a strap, elastic band, sewn into clothing, etc. If positioned at a distance from the gloves 12, 14, the electronic module 40 may be configured to communicate wirelessly with the various elements of the gloves 12, 14 using a wireless transmission protocol (e.g., Bluetooth™) instead of via the electrical connectors.

The electronic module 40 may include a calculating device 46, such as a processor, for performing calculations. For example, the calculating device 46 may calculate a dimension of an object used time-based signals from the wireless communication devices 30. Also, the calculating device 46 may calculate weight based on the signals from the plurality of force sensors 28. The calculating device 46 may also decode a code (e.g., barcode) scanned by the scanner 24.

The electronic module 40 may also include a transceiver module 48 for wireless communication. In some embodiments, the transceiver module 48 may be used in place of the electrical connectors 42 for enabling communication with the various electrical elements of the gloves 12, 14. The transceiver module 48 may also be used to communicate with a remote computing device, such as a server, that receives information (size, weight, identification) about objects being analyzed in a facility.

The electronic module 40 may also comprise a power source 50, such as a battery, for providing power to the calculating device 46 and transceiver module 48. The power source 50 may also provide power to the display device 22, scanner 24, touch pads 26, force sensors 28, and wireless communication devices 30.

Therefore, according to various embodiments and implementations of the present disclosure, a measuring apparatus may be provided comprising a right-handed glove 12 configured to be worn on the right hand of a user and a left-handed glove 14 configured to be worn on the left hand of the user. The measuring apparatus may also include a first wireless communication device 30 attached to the right-handed glove 12 and a second wireless communication device 30 attached to the left-handed glove 14. The measuring apparatus may also include a calculating device 46. The first and second wireless communication devices 30 may be configured to wirelessly communicate time-based signals with each other. The calculating device 46 utilizes the time-based signals to determine a first dimension of an object 34.

Furthermore, the measuring apparatus may comprise a plurality of force sensors 28 attached to finger portions 16R, 16L of the right-handed and left-handed gloves 12, 14. The force sensors 28 may be configured to measure the weight of the object 34. Each finger portion 16R, 16L of each of the right-handed and left-handed gloves 12, 14 includes at least one force sensor 28.

The measuring apparatus further comprises a scanning module 24 attached to a finger portion 16R, 16L of one of the right-handed and left-handed gloves 12, 14. The scanning module 24 may be configured to scan a barcode on the object.

In addition, the measuring apparatus may comprise at least one touch pad 26 attached to one of the right-handed and left-handed gloves 12, 14, the at least one touch pad 26 configured to receive input from the user. The at least one touch pad 26 may be configured to enable the user to trigger a measuring or scanning operation.

Also, the measuring apparatus may further comprise a display device 22 attached to a hand portion 20R, 20L of at least one of the right-handed and left-handed gloves 12, 14. The display device 22 may be configured to display the first dimension of the object.

The measuring apparatus may further comprise an electronic module 40 configured to be worn on a wrist or arm of the user. The electronic module 40 may be configured to communicate directly with at least one of the first and second wireless communication devices 30. The calculating device 46 may be a processor disposed in the electronic module 40. The electronic module 40 may also comprise a power source 50 and a transceiver module 48 configured to communicate with a remote computing device.

The calculating device 46 may utilize the time-based signals and a signal transmission speed to determine displacement between the first wireless communication device 30 and the second wireless communication device 30. The displacement can be used to determine the first dimension of the object 34.

According to various embodiments and implementations of the present disclosure, another measuring apparatus may be provided. For example, the measuring apparatus may include a pair of gloves 10 and means 30, attached to the pair of gloves 10, for determining a first dimension of an object 34. The measuring apparatus may also include means 28, attached to the pair of gloves 10, for measuring the weight of the object 34.

Furthermore, the measuring apparatus may further comprise means 24, attached to the pair of gloves 10, for scanning a code 36 on the object 34 to obtain an identification of the object 34. Also, the measuring apparatus may include means 26, attached to the pair of gloves 10, for receiving at least one input from a user to trigger at least one of the functions of determining the first dimension d of the object 34, measuring the weight of the object 34, and scanning the code 36 on the object 34. Also, means 22 may be attached to the pair of gloves 10 for displaying at least one of the first dimension, weight, and identification of the object 34. Means 48 may also be included for communicating the first dimension d, the weight, and the identification of the object 34 to a remote computing device.

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation. The invention is defined by the appended claims.

## Claims

1. A measuring apparatus comprising:
a right-handed glove (12) configured to be worn on the right hand of a user;
a left-handed glove (14) configured to be worn on the left hand of the user;
a first wireless communication device (30) attached to the right-handed glove;
a second wireless communication device (30) attached to the left-handed glove; and
a calculating device (46); wherein the first and second wireless communication devices are configured to wirelessly communicate time-based signals with each other; and
wherein the calculating device utilizes the time-based signals to determine a first dimension of an object.

2. The measuring apparatus of claim 1, further comprising a plurality of force sensors attached to finger portions of the right-handed and left-handed gloves.

3. The measuring apparatus of claim 2, wherein the force sensors are configured to measure the weight of the object.

4. The measuring apparatus of claim 2, wherein each finger portion of each of the right-handed and left-handed gloves includes at least one force sensor.

5. The measuring apparatus of claim 1, further comprising a scanning module attached to a finger portion of one of the right-handed and left-handed gloves.

6. The measuring apparatus of claim 5, wherein the scanning module is configured to scan a barcode on the object.

7. The measuring apparatus of claim 1, further comprising at least one touch pad attached to one of the right-handed and left-handed gloves, the at least one touch pad configured to receive input from the user.

8. The measuring apparatus of claim 7, wherein the at least one touch pad is configured to enable the user to trigger a measuring or scanning operation.

9. The measuring apparatus of claim 1, further comprising a display device attached to a hand portion of at least one of the right-handed and left-handed gloves, the display device configured to display the first dimension of the object.

10. The measuring apparatus of claim 1, further comprising an electronic module configured to be worn on a wrist or arm of the user, wherein the electronic module is configured to communicate directly with at least one of the first and second wireless communication devices.

11. The measuring apparatus of claim 10, wherein the calculating device is a processor disposed in the electronic module.

12. The measuring apparatus of claim 10, wherein the electronic module comprises a power source.

13. The measuring apparatus of claim 10, wherein the electronic module comprises a transceiver module configured to communicate with a remote computing device.

14. The measuring apparatus of claim 1, wherein the calculating device utilizes the time-based signals and a signal transmission speed to determine displacement between the first wireless communication device and the second wireless communication device, the displacement used to determine the first dimension of the object.

## Patentansprüche

1. Messvorrichtung, umfassend:
einen rechten Handschuh (12), der dafür ausgelegt ist, an der rechten Hand eines Benutzers getragen zu werden;
einen linken Handschuh (14), der dafür ausgelegt ist, an der linken Hand des Benutzers getragen zu werden;
eine erste drahtlose Kommunikationsvorrichtung (30), die am rechten Handschuh angebracht ist;
eine zweite drahtlose Kommunikationsvorrichtung (30), die am linken Handschuh angebracht ist; und
eine Rechenvorrichtung (46);
wobei die erste und die zweite drahtlose Kommunikationsvorrichtung dafür ausgelegt sind, untereinander drahtlos zeitbasierte Signale zu übermitteln; und
wobei die Rechenvorrichtung die zeitbasierten Signale nutzt, um eine erste Dimension eines Gegenstands zu bestimmen.

2. Messvorrichtung nach Anspruch 1, ferner mehrere Kraftsensoren umfassend, die an Fingerabschnitten des rechten und des linken Handschuhs angebracht sind.

3. Messvorrichtung nach Anspruch 2, wobei die Kraftsensoren dafür ausgelegt sind, das Gewicht des Gegenstands zu messen.

4. Messvorrichtung nach Anspruch 2, wobei jeder Fingerabschnitt sowohl des rechten als auch des linken Handschuhs wenigstens einen Kraftsensor aufweist.

5. Messvorrichtung nach Anspruch 1, ferner ein Abtastungsmodul umfassend, das an einem Fingerabschnitt entweder des rechten oder des linken Handschuhs angebracht ist.

6. Messvorrichtung nach Anspruch 5, wobei das Abtastungsmodul dafür ausgelegt ist, einen Strichcode auf dem Gegenstand einzulesen.

7. Messvorrichtung nach Anspruch 1, ferner wenigstens ein Berührungsfeld umfassend, das entweder am rechten oder am linken Handschuh angebracht ist, wobei das wenigstens eine Berührungsfeld dafür ausgelegt ist, Eingaben vom Benutzer zu empfangen.

8. Messvorrichtung nach Anspruch 7, wobei das wenigstens eine Berührungsfeld dafür ausgelegt ist, den Benutzer zu befähigen, eine Mess- oder Abtastungsoperation auszulösen.

9. Messvorrichtung nach Anspruch 1, ferner eine Anzeigevorrichtung umfassend, die an einem Handabschnitt des rechten und/oder linken Handschuhs angebracht ist, wobei die Anzeigevorrichtung dafür ausgelegt ist, die erste Dimension des Gegenstandes anzuzeigen.

10. Messvorrichtung nach Anspruch 1, ferner ein Elektronikmodul umfassend, das dafür ausgelegt ist, an einem Handgelenk oder Arm des Benutzers getragen zu werden, wobei das Elektronikmodul dafür ausgelegt ist, direkt mit der ersten und/oder der zweiten drahtlosen Kommunikationsvorrichtung zu kommunizieren.

11. Messvorrichtung nach Anspruch 10, wobei die Rechenvorrichtung ein Prozessor ist, der im Elektronikmodul angeordnet ist.

12. Messvorrichtung nach Anspruch 10, wobei das Elektronikmodul eine Energiequelle umfasst.

13. Messvorrichtung nach Anspruch 10, wobei das Elektronikmodul ein Sendeempfängermodul umfasst, das dafür ausgelegt ist, mit einer entfernten Recheneinheit zu kommunizieren.

14. Messvorrichtung nach Anspruch 1, wobei die Rechenvorrichtung die zeitbasierten Signale und eine Signalübertragungsgeschwindigkeit nutzt, um einen Abstand zwischen der ersten drahtlosen Kommunikationsvorrichtung und der zweiten drahtlosen Kommunikationsvorrichtung zu bestimmen, wobei der Abstand dazu dient, die erste Dimension des Gegenstandes zu bestimmen.

## Revendications

1. Appareil de mesure comprenant :
un gant droit (12) configuré pour être porté sur la main droite d'un utilisateur ;
un gant gauche (14) configuré pour être porté sur la main gauche de l'utilisateur ;
un premier dispositif de communication sans fil (30) fixé au gant droit ;
un second dispositif de communication sans fil (30) fixé au gant gauche ; et
un dispositif de calcul (46) ;
où les premier et second dispositifs de communication sans fil sont configurés pour communiquer sans fil, des signaux temporels, l'un avec l'autre ; et
où le dispositif de calcul utilise les signaux temporels pour déterminer une première dimension d'un objet.

2. Appareil de mesure selon la revendication 1, comprenant en outre une pluralité de capteurs de force fixés à des parties de doigts des gants droit et gauche.

3. Appareil de mesure selon la revendication 2, dans lequel les capteurs de force sont configurés pour mesurer le poids de l'objet.

4. Appareil de mesure selon la revendication 2, dans lequel chaque partie de doigt de chacun des gants droit et gauche comprend au moins un capteur de force.

5. Appareil de mesure selon la revendication 1, comprenant en outre un module de scannage fixé à une partie de doigt d'un des gants droit et gauche.

6. Appareil de mesure selon la revendication 5, dans lequel le module de scannage est configuré pour scanner un code à barres sur l'objet.

7. Appareil de mesure selon la revendication 1, comprenant en outre au moins un pavé tactile fixé à l'un des gants droit et gauche, l'au moins un pavé tactile étant configuré pour recevoir une entrée de l'utilisateur.

8. Appareil de mesure selon la revendication 7, dans lequel l'au moins un pavé tactile est configuré pour permettre à l'utilisateur de déclencher une opération de mesure ou de scannage.

9. Appareil de mesure selon la revendication 1, comprenant en outre un dispositif d'affichage fixé à une partie de main d'au moins un des gants droit et gauche, le dispositif d'affichage étant configuré pour afficher la première dimension de l'objet.

10. Appareil de mesure selon la revendication 1, comprenant en outre un module électronique configuré pour être porté sur le poignet ou le bras de l'utilisateur, où le module électronique est configuré pour communiquer directement avec au moins l'un des premier et second dispositifs de communication sans fil.

11. Appareil de mesure selon la revendication 10, dans lequel le dispositif de calcul est un processeur disposé dans le module électronique.

12. Appareil de mesure selon la revendication 10, dans lequel le module électronique comprend une source d'alimentation.

13. Appareil de mesure selon la revendication 10, dans lequel le module électronique comprend un module émetteur-récepteur configuré pour communiquer avec un dispositif informatique distant.

14. Appareil de mesure selon la revendication 1, dans lequel le dispositif de calcul utilise les signaux temporels et une vitesse de transmission du signal pour déterminer le déplacement entre le premier dispositif de communication sans fil et le second dispositif de communication sans fil, le déplacement étant utilisé pour déterminer la première dimension de l'objet.
